# EUROPEAN PATENT APPLICATION

(11) **EP 4 775 101 A1**
(43) Date of publication of application: **15.07.2026**
(21) Application number: 25226986.5
(22) Date of filing: 23.12.2025
(51) Int. Cl.: A47J 31/36, A47J 31/44

(54) **DEVICE FOR PRESSING COFFEE POWDER**

(30) Priority: 13.01.2025 IT 202500000360
(71) Applicant: Caretta, Matteo, 36030 Montecchio Precalcino (VI) (IT)
(72) Inventor: CARETTA, Matteo, 36030 MONTECCHIO PRECALCINO (VI) (IT); CARETTA, Ivano, 36016 THIENE (VI) (IT)
(74) Representative: Marchioro, Paolo

(57) **Abstract**

Device (1, 100, 200) for pressing coffee powder (C) into a dosing filter (10), comprising:
- a support structure (2),
- a bearing frame (3) operatively associated with the support structure (2) and configured to carry the dosing filter (10);
- pressing means (4) mounted on said support structure (2) on top of the bearing frame (3) and comprising a pressing body (41) configured to translate along a substantially vertical axis (X) between a rest position and at least a working position in which such pressing body (41) is configured to compress a dose of coffee powder (C) present in the dosing filter (10), wherein the pressing body (41) is configured to rotate about the axis (X) during said compression.

## Description

The invention concerns a device for pressing coffee powder.

The device of the invention fits into the industrial sector of catering machine manufacture and is advantageously intended for use in bars and restaurants, where it is necessary to press coffee powder before the drink can be prepared. In the professional coffee preparation process, such as in coffee bars, the beans are ground into a powder that is placed in a dosing filter. Before preparing the drink, the powder must be pressed into the dosing filter, making the powder more compact and resistant to the passage of water. This promotes a homogeneous extraction of soluble substances, directly influencing the quality of the coffee. Pressing is generally performed manually with a device called a press, consisting of a cylindrical pressing body and a handle to exert the necessary force.

However, manual presses have significant limitations, including the variability of the pressure applied, which affects the result obtained, and barista fatigue, which can lead to physical injury due to repetitive strain.

To overcome these problems, automatic pressing devices have been introduced, equipped with a support structure and automatic or manual pressing means.

Pressing means generally comprise a pressing body that moves vertically between a raised position, in which it is away from the dosing filter, and a lowered position, in which it presses the coffee powder.

Although well known and appreciated, such a device nevertheless has some important limitations related to the inhomogeneity of powder pressing.

In particular, known devices have a pressing system that does not allow the powder to be evenly distributed within the dosing filter.

Therefore, disadvantageously, this inhomogeneity will have a negative impact on the quality of the drink.

The task of the present invention is to develop a coffee powder pressing device capable of obviating the aforementioned drawbacks and limitations of the prior art.

In particular, it is the object of the present invention to realise an automatic device for pressing coffee powder.

Furthermore, an object of the invention is to develop a device for pressing coffee powder that allows homogeneous distribution of the powder within the dosing filter.

The above-mentioned task and objects are achieved by a device according to claim 1.

Further characteristics of the device according to claim 1 are described in the dependent claims.

The aforesaid task and objects, together with the advantages that will be mentioned hereinafter, are indicated by the description of three embodiments of the invention, which are given by way of non-limiting example with reference to the accompanying drawings, where:
- Figure 1 shows a perspective view of the interior of a device for pressing coffee powder according to a first embodiment of the invention;
- Figure 2 shows a sectional view of the device in Figure 1;
- Figure 3 shows the same sectional view of the device as Figure 2 in which the device of the invention is in a different operating position;
- Figure 4 shows a perspective view of a device for pressing coffee powder according to a second embodiment of the invention;
- Figure 5 shows a perspective exploded view of the device in Figure 4;
- Figure 6 shows a perspective view of the inside of the device in Figure 4;
- Figure 7 shows a top view of the device in Figure 6;
- Figure 8 shows a view of the device according to the section plane indicated in Figure 7;
- Figure 9 shows a perspective view of the inside of the device in Figure 4 in a different operating position;
- Figure 10 shows a top view of the device in Figure 9;
- Figure 11 shows a view of the device according to the section plane indicated in Figure 10;
- Figure 12 shows a perspective view of a device for pressing coffee powder according to a third embodiment of the invention;
- Figure 13 shows a sectional view of the device in Figure 12;
- Figure 14 shows some elements of the device in Figure 12;
- Figure 15 shows another element of the device in Figure 12;
- Figure 16 shows a further element of the device in Figure 12.

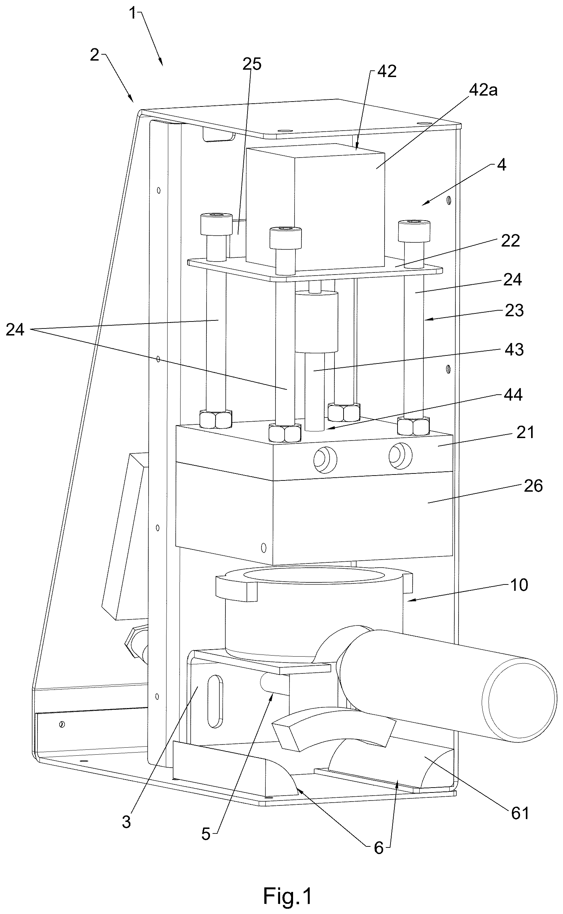

The device for pressing coffee powder according to a first embodiment of the invention is shown in Figures 1, 2 and 3 where it is indicated as a whole by the number **1.**

This device **1** is configured to press coffee powder **C** arranged inside a dosing filter **10.**

Such a device **1** comprises:
- a support structure **2;**
- a bearing frame **3** operatively associated with the support structure **2** and configured to carry the dosing filter **10;**
- pressing means **4** mounted on such a support structure **2** on top of the bearing frame **3.**

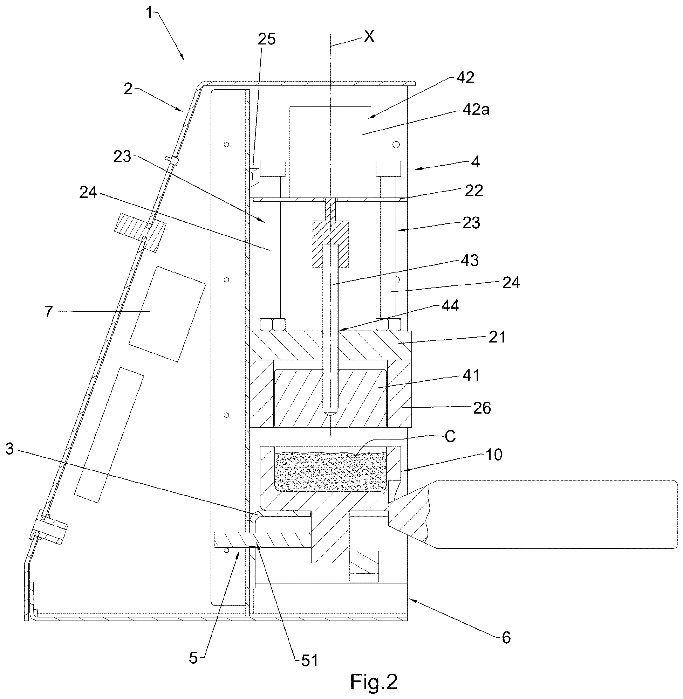

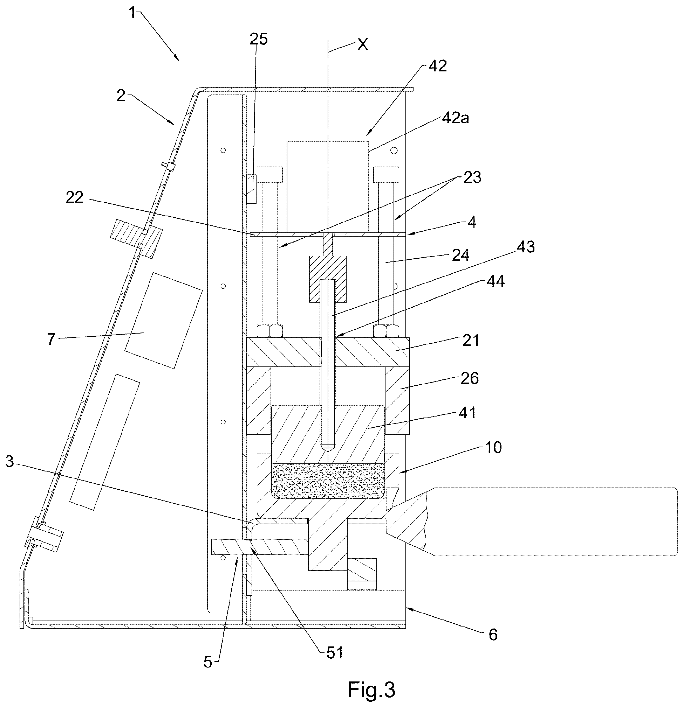

Such pressing means **4** comprise a pressing body **41** configured to translate along a substantially vertical axis **X** between a rest position, clearly visible in Figure 2, and at least a working position, visible in Figure 3, in which said pressing body **41** is configured to compress a dose of coffee powder **C** present in the dosing filter **10.**

As can be seen in Figure 2, the rest position is understood to be a position in which the pressing body **41** is spaced apart from the dosing filter **10.**

It should be specified that the pressing body **41** is configured to rotate about the axis **X** during the aforementioned compression.

This configuration, advantageously, allows for a homogeneous pressing and distribution of the coffee powder within the dosing filter **10.**

In particular, the rotation of the pressing body **41** around the axis **X** during compression ensures that the coffee powder is evenly distributed within the dosing filter **10.** In this way, according to one of the purposes of the invention, a better quality of the drink will be achieved.

Preferably, the pressing body **41** has a substantially cylindrical shape. This configuration is optimal for pressing coffee powder into the dosing filters, which are typically also circular.

Continuing the description of the first embodiment of the invention, it should be specified that the pressing means **4** comprise a motion induction member **42.** This motion induction member **42** is configured to induce the translation and/or rotation of the pressing body **41.**

Preferably, but not exclusively, this motion induction member **42** is an electric motor **42a.**

In addition, the pressing means **4** comprise a threaded shaft **43** arranged along said axis **X** and interposed between the motion induction member **42** and the pressing body **41** in such a manner as to operatively connect such motion induction member **42** and such pressing body **41.**

The aforementioned motion induction member **42** is configured to transmit a rotation to the threaded shaft **43.**

In the preferred configuration of the first embodiment of the invention, the motion induction member **42** is arranged on a support plate **22** adapted to translate along the axis **X** in agreement with the threaded shaft **43** and the pressing body **41.**

In addition, a section of the threaded shaft **43** is accommodated in a nut-screw element **44** defined on a fixed element **21** integral with the support structure **2.** Therefore, the configuration described allows the motion induction member **42** to implement both translation and rotation of the pressing body **41.**

In particular, as mentioned above, the motion induction member **42** is configured to transmit rotation to the threaded shaft **43** which rotates by insisting on the nut-screw element **44** and, as a result, this threaded shaft **43** translates upwards or downwards, depending on the direction of rotation transmitted by the motion induction element **42.**

The threaded shaft **43** then transmits rotation and translation to the pressing body **41.**

Preferably, the pressing body **41** and the threaded shaft **43** are directly connected.

The described configuration allows for an automatic device that is easy to implement.

As previously discussed, the motion induction member **42** is arranged on a support plate **22** adapted to translate along the axis **X** in agreement with the pressing body **41.**

This translation of this support plate **22** is guided by guide elements **23** fixed onto the fixed element **21.**

Preferably, but not exclusively, the guide elements **23** are four guide rods **24** arranged at the vertices of the fixed element **21** whose extension axes are arranged parallel to the axis **X.**

Advantageously, the support plate **22** and the guide elements **23** facilitate the translation of the motion induction member **42.**

A further aspect of the first embodiment of the device of the invention is that it comprises an end-of-stroke sensor **25** adapted to detect the position of the support plate **22** when the pressing body **41** is in the rest position.

This configuration allows the device **1** to know the position of the support plate **22** and, consequently, of the pressing body **41.**

In addition, the device **1** comprises a seat **26** for the pressing body **41.** Preferably, the seat **26** also has a substantially cylindrical internal shape. Preferably, but not necessarily, the pressing body **41** is configured to exert at least two different pressure forces.

In particular, this pressing body **41** is configured to exert three different pressure forces.

This configuration is made possible by the fact that the motion induction member **42** is configured to be supplied with as many different voltages.

Continuing the description of the preferred form of the first embodiment of the invention, it should be noted that the device **1** comprises detection means **5** configured to detect the presence of the dosing filter **10.**

Preferably, such detection means **5** comprise an inductive sensor **51** arranged in proximity to the bearing frame **3.** However, it is not excluded that the detection means **5** comprise a sensor of another known type.

Such detection means **5** are operatively connected to a logical unit **7** and configured to send first data signals to such logical unit **7** when they detect the presence of said dosing filter **10.**

The logic unit **7** is configured to activate the motion induction member **42** based on these first data signals.

This configuration prevents any accidental start-up of the device **1.**

In fact, pressing will only take place when the presence of said dosing filter **10** is detected.

A further aspect of the device **1** lies in the fact that it comprises luminous warning means **6** configured to:
- emit a first luminous signal in a first colour in the event that the device **1** is in a waiting status;
- emit a second luminous signal in a second colour in the event that the device **1** is in a working status;
- emit a third luminous signal in a third colour in the event that said device **1** is in a work end status.

A waiting status is when the device **1** is not pressing coffee and is waiting for a dosing filter **10** to be placed on the bearing frame **3.**

Working status means when the device **1** is pressing coffee.

The work end status refers to the moments after the device **1** has finished pressing the coffee.

In particular, as can be seen in Figure 1, the luminous warning means **6** comprise LED lights **61** arranged below the bearing frame **3.**

The described configuration advantageously allows the user to visually understand what working status the device is in.

In particular, the user can understand when the device has finished pressing the coffee and is allowed to remove the dosing filter **10.**

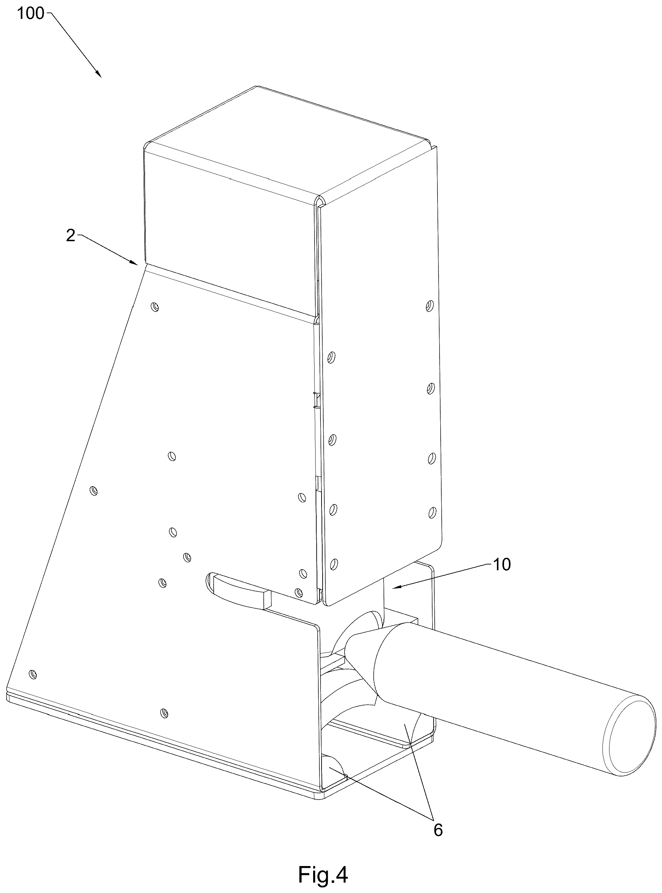

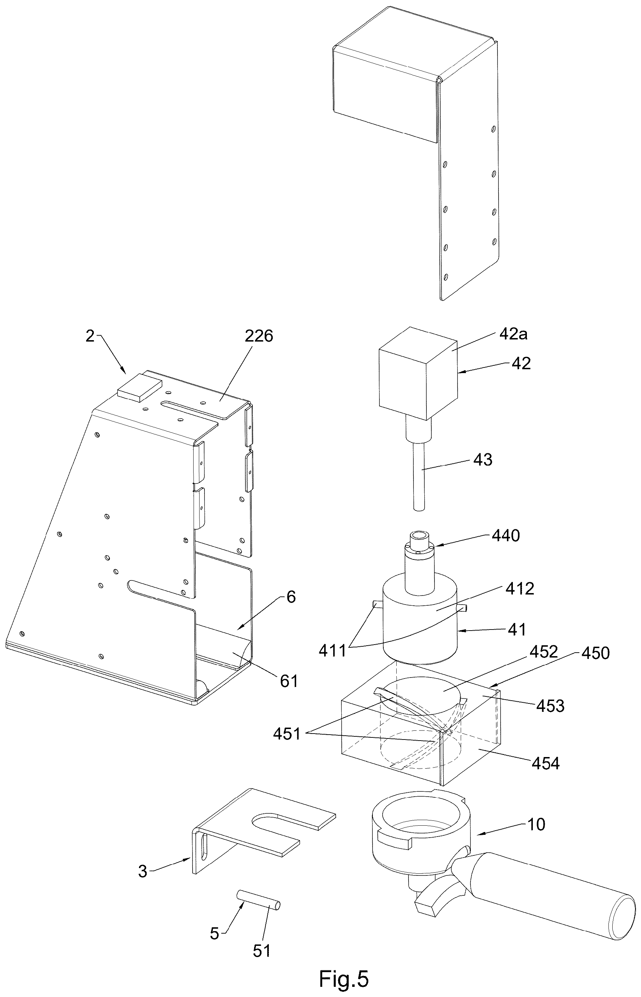

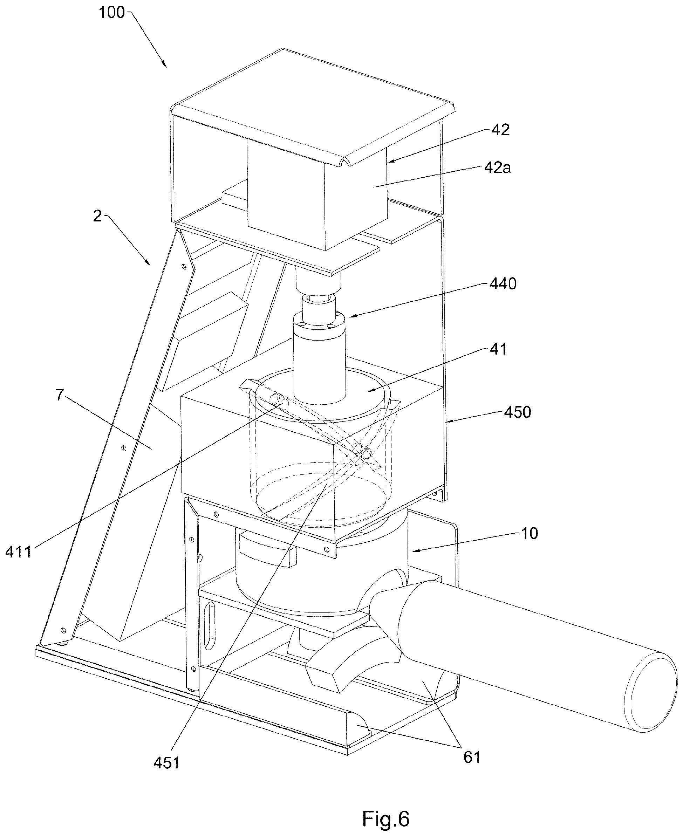

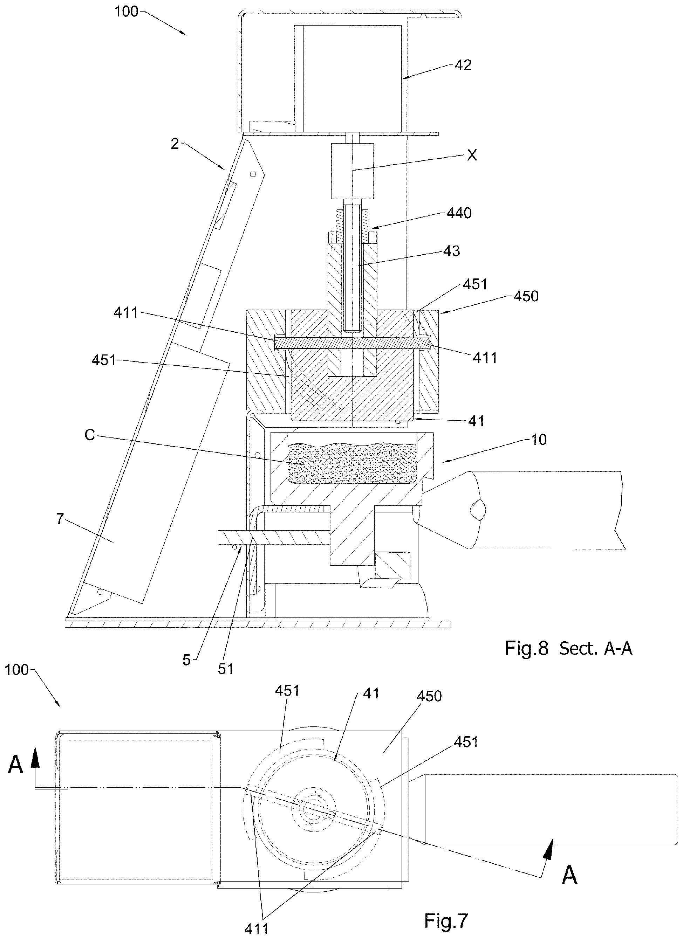

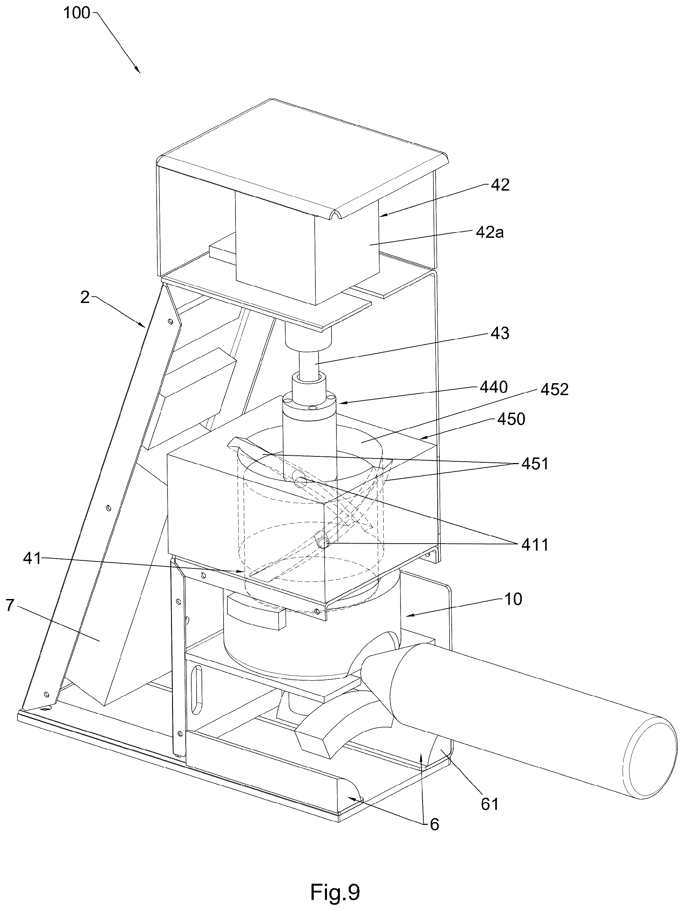

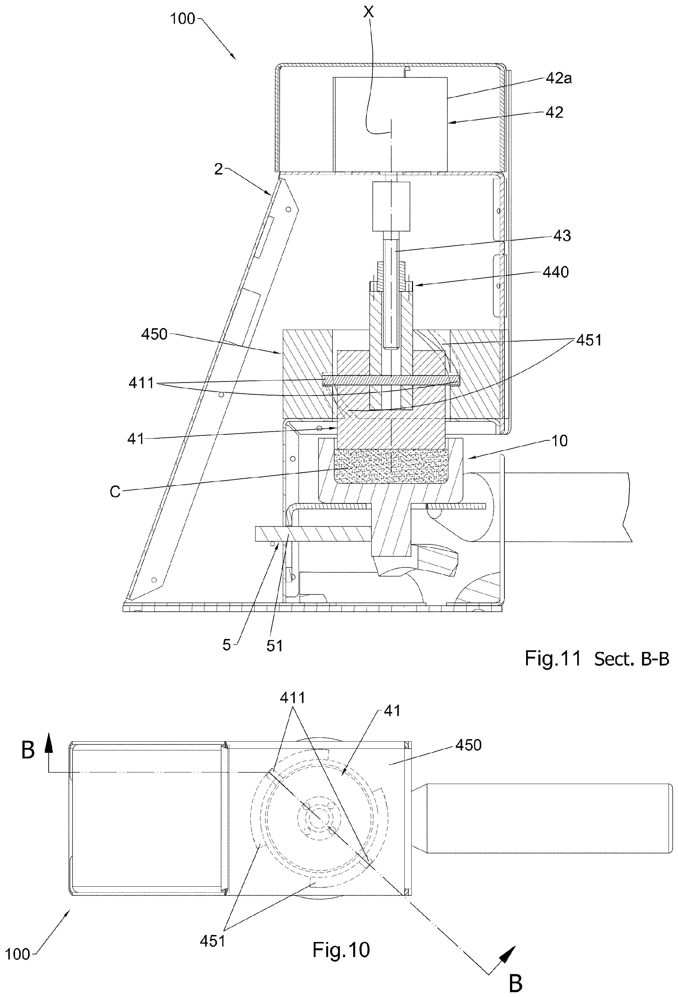

A second embodiment of the device of the invention is shown in Figures 4 to 11 wherein it is indicated overall by **100,** and wherein the features and elements in common with the device of the preceding first embodiment are indicated with the same numerical reference.

In particular, the device **100** according to this second embodiment presents all the characteristics of the first embodiment described above, except that the motion induction member **42** is arranged on a bearing element **226** integral with the support structure **2.**

In addition, the threaded shaft **43** is accommodated in a nut-screw element **440** securely attached or, alternatively, secured by means of a suitable bearing to the pressing body **41.** This pressing body **41** is arranged in a seat **450** integral with the support structure **2.** This seat **450** also has a substantially cylindrical internal shape.

This configuration requires the motion induction member **42** to remain stationary during the translation of the pressing body **41.**

The motion transmission element **42** then transmits the rotation to the threaded shaft **43** which rotates pressing on the nut-screw element **440.** This induces the rototranslation of the nut-screw element **440** and the pressing body **41** fixedly associated thereto.

Preferably, the pressing body **41** comprises on its lateral surface **412** two protrusions **411** each of which is adapted to slide within a respective shaped guide **451** defined on the inner surface **452** of the seat **450.**

Preferably, such two protrusions **411** are defined by opposite sides of the lateral surface **412.**

It is not excluded that the number of protrusions **411** and respective shaped guides **451** is one or more than two.

Preferably, the aforesaid shaped guides **451** have an extension from the upper surface **453** to the lower surface **454** of the seat **450** which is inclined with respect to the axis **X.**

In particular, these shaped guides **451** have a substantially helical shape.

The configuration described allows the above-mentioned rototranslation to be implemented.

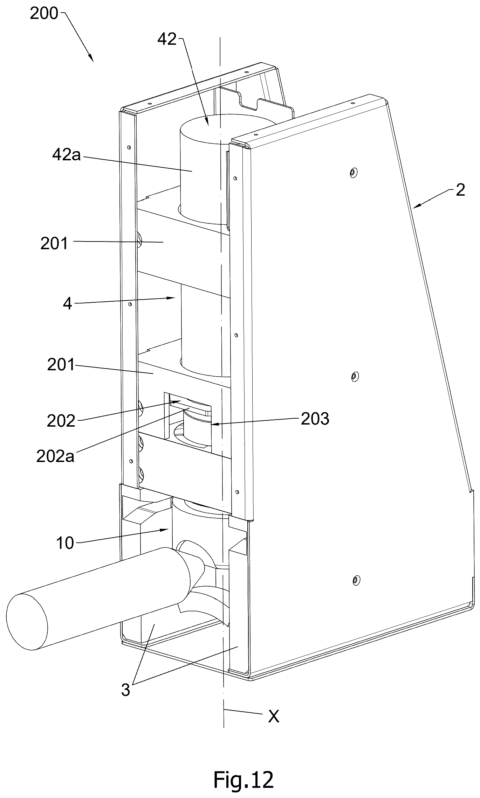

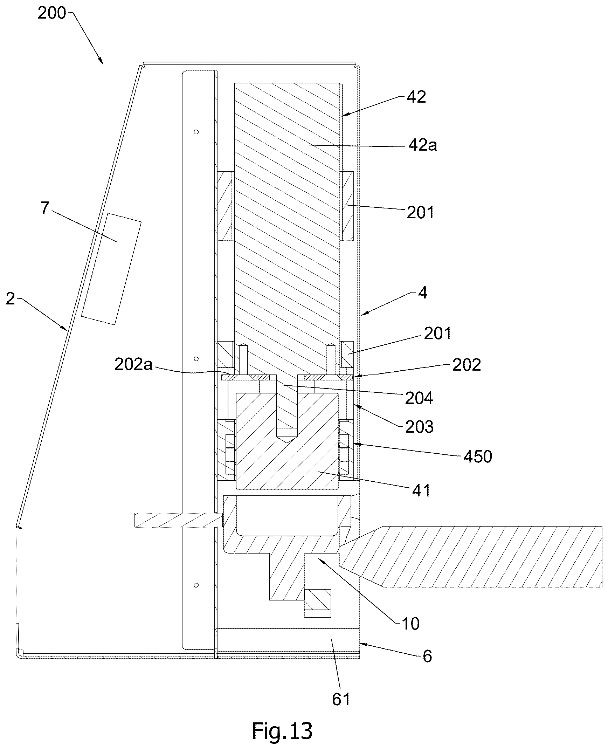

A third embodiment of the invention is depicted in Figures 12 to 15 where it is shown overall with **200,** and where features and elements in common with the previous first and second embodiments are indicated with the same numerical reference.

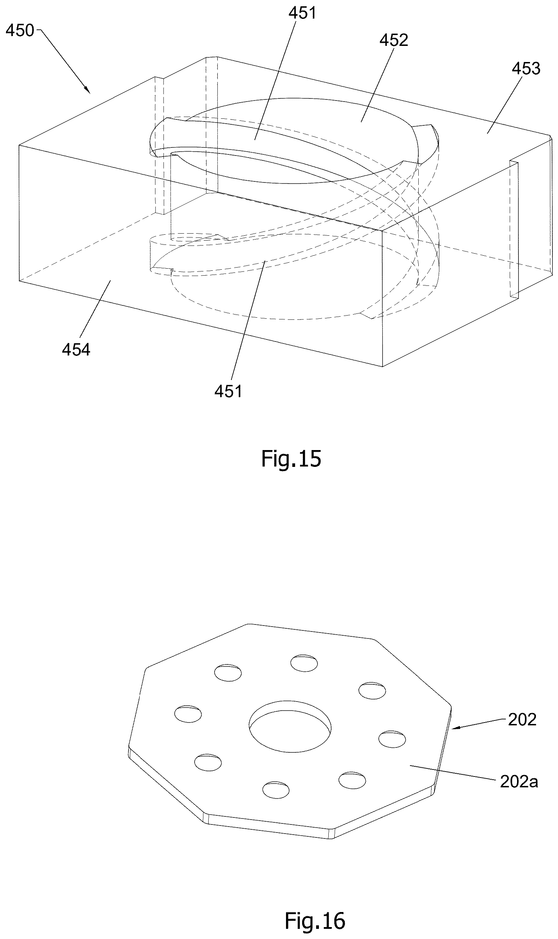

Said third embodiment, in particular, envisages that the motion induction member **42,** preferably the electric motor **42a,** of the pressing means **4** is arranged passing into suitable supports **201** fixed to the support structure **2,** in such a manner that the same motion induction member **42** is configured to translate along the axis **X,** but at the same time its rotation with respect to the same supports **201** is prevented by means of suitable locking means **202.** More particularly, according to said third embodiment, preferably said locking means **202** comprise, along at least a portion of the body of said electric motor **42a** and in a plane orthogonal to said axis **X,** a polygonal profile **202a** adapted to be arranged along a guide **203,** defined in one of said supports **201,** precisely so as to allow translation of the electric motor **42a** along the axis **X,** but to prevent its rotation. The polygonal profile **202a** is visible in isolation in Figure 16. Further and clearly, such motion induction member **42,** in particular such electric motor **42a,** is provided with a rotating shaft **204,** which in the case of the aforementioned third embodiment of the invention is integral with the pressing body **41.** In this way, there is clearly direct transmission of rotation between the shaft **204** and the pressing body **41.**

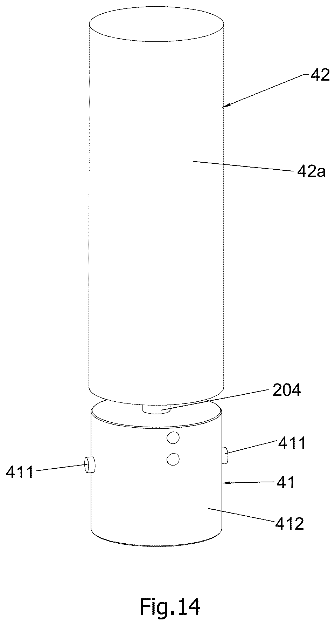

At this point, to also induce translation along the axis **X** of the pressing body **41** in conjunction with the motion induction member **42,** the same pressing body **41,** as in the case of the second embodiment of the invention, described above, comprises on its lateral surface **412** two protrusions **411,** each of which is adapted to slide within a respective shaped guide **451** defined on the inner surface **452** of a seat **450.** These features are clearly visible in Figures 14 and 15 wherein Figure 14 individually shows the pressing body **41** together with the motion induction member **42** and Figure 15 shows the seat **450.**

Preferably, such two protrusions **411** are defined by opposite sides of the lateral surface **412.**

It is not excluded that the number of protrusions **411** and respective shaped guides **451** is one or more than two.

Preferably, the aforementioned shaped guides **451** have an extension from the upper surface **453** to the lower surface **454** of the seat **450** and are inclined with respect to the axis **X.**

In particular, these shaped guides **451** have a substantially helical shape. Also included in the invention is a method of pressing coffee powder **C** into a dosing filter **10** implemented by means of a device **1, 100, 200.**

A first simple version of the method of the invention comprises the following steps:
a) translation of the pressing body **41** from the rest position to the working position, such pressing body **41,** at least in said working position, also being placed in rotation;
b) translation of the pressing body **41** from the working position to the rest position.

A second more complex version of the method of the invention comprises the following steps:
a) translation of the pressing body **41** from the rest position to the working position, such pressing body **41,** at least in said working position, also being placed in rotation;
b) translation of the pressing body **41** from the working position to an intermediate position between the working position and the rest position;
c) translation of the pressing body **41** from the intermediate position to the working position, this pressing body **41,** at least in said working position, also being placed in rotation;
d) translation of the pressing body **41** from the working position to the rest position.

In practice, this second version compacts the coffee by means of two successive presses of the pressing body **41.** This makes the coffee in the dosing filter even more homogeneous and compact.

Practically, it has been established that the invention achieves the intended task and objects.

In particular, with the invention, an automatic device for pressing coffee powder has been developed.

In addition, a device has been developed to press coffee powder, which allows an even distribution of the powder within the dosing filter.

## Claims

1. Device (1, 100, 200) for pressing coffee powder (C) into a dosing filter (10), comprising:
- a support structure (2),
- a bearing frame (3) operatively associated with said support structure (2) and configured to carry said dosing filter (10);
- pressing means (4) mounted on said support structure (2) on top of said bearing frame (3) and comprising a pressing body (41) configured to translate along a substantially vertical axis (X) between a rest position and at least a working position in which said pressing body (41) is configured to compress a dose of coffee powder (C) present in said dosing filter (10), **characterised in that** said pressing body (41) is configured to rotate about said axis (X) during said compression.

2. Device (1, 100, 200) according to claim 1, **characterised in that** said pressing means (4) comprise a motion induction member (42) configured to induce said translation and/or said rotation of said pressing body (41).

3. Device (1, 100, 200) according to claim 2, **characterised in that** said pressing means (4) comprise a threaded shaft (43) arranged along said axis (X) and interposed between said motion induction member (42) and said pressing body (41) in such a way as to operatively connect said motion induction member (42) and said pressing body (41), said motion induction member (42) being configured to transmit a rotation to said threaded shaft (43).

4. Device (1) according to claim 3, **characterised in that** said motion induction member (42) is arranged on a support plate (22) adapted to translate along said axis (X) in agreement with said threaded shaft (43) and said pressing body (41), a section of said threaded shaft (43) being accommodated in a nut-screw element (44) defined on a fixed element (21) integral with said support structure (2).

5. Device (1) according to claim 4, **characterised in that** the translation of said support plate (22) is guided by guide elements (23) fixed onto said fixed element (21).

6. Device (100) according to claim 3, **characterised in that** said motion induction member (42) is arranged on a bearing element (226) integral with said support structure (2), a section of said threaded shaft (43) being accommodated in a nut-screw element (440) fixedly associated with said pressing body (41), said pressing body (41) being arranged in a seat (450) integral with said support structure (2).

7. Device (100) according to claim 6, **characterised in that** said pressing body (41) has a cylindrical shape and comprises on its lateral surface (412) at least one protrusion (411) adapted to slide inside a shaped guide (451) defined on the inner surface (452) of said seat (450).

8. Device (10) according to claim 7, **characterised in that** said shaped guide (451) has an extension from the upper surface (453) to the lower surface (454) of said seat (450) and is inclined with respect to said axis (X).

9. Device (1) according to any one of the preceding claims, **characterised in that** it comprises detection means (5) configured to detect the presence of said dosing filter (10).

10. Device (1) according to any one of the preceding claims, **characterised in that** it comprises luminous warning means (6) configured to:
- emit a first luminous signal in a first colour in the event that said device is in a waiting status;
- emit a second luminous signal in a second colour in the event that said device is in a working status;
- emit a third luminous signal in a third colour in the event that said device is in a work end status.

11. Device (200) according to claim 2, **characterised in that** said motion induction member (42) is arranged passing into supports (201) integral with said support structure (2) so that said motion induction member (42) is configured to translate along said axis (X), and **in that** at the same time it cannot rotate with respect to said supports (201) by appropriate locking means (202).

12. Device (200) according to claim 11, **characterised in that** said locking means (202) comprise, along at least a portion of the body of said motion induction member (42) and according to a plane orthogonal to said axis (X), a polygonal profile (202a) adapted to be arranged along a guide (203), defined in one of said supports (201), so as to allow the translation of said motion induction member (42) along said axis (X), but at the same time to prevent its rotation.

13. Device (200) according to any one of claims 11 or 12, **characterised in that** said motion induction member (42) is provided with a rotating shaft (204) integral with said pressing body (41).

14. Device (200) according to claim 13, **characterised in that** said pressing body (41) is arranged in a seat (450) integral with said support structure (2), said pressing body (41) having a cylindrical shape and comprising on its lateral surface (412) at least one protrusion (411) adapted to slide into a shaped guide (451) defined on the inner surface (452) of said seat (450), said shaped guide (451) having an extension from the upper surface (453) to the lower surface (454) of said seat (450) and being inclined with respect to the axis (X).

15. Method of pressing coffee powder (C) into a dosing filter (10) by means of a device (1, 100, 200) according to any one of the preceding claims, **characterised in that** it comprises the following steps:
a) translation of said pressing body (41) from said rest position to said working position, said pressing body (41), at least in said working position, also being placed in rotation;
b) translation of said pressing body (41) from said working position to an intermediate position between said working position and said rest position;
c) translation of said pressing body (41) from said intermediate position to said working position, said pressing body (41), at least in said working position, also being placed in rotation;
d) translation of said pressing body (41) from said working position to said rest position.
